# EUROPEAN PATENT APPLICATION

(11) **EP 4 729 556 A1**
(43) Date of publication of application: **22.04.2026**
(21) Application number: 24823175.5
(22) Date of filing: 20.05.2024
(51) Int. Cl.: C08G 63/183, C09D 5/02, C09D 167/02

(54) **CRYSTALLINE POLYESTER RESIN AQUEOUS DISPERSION, COATING COMPOSITION, COATING FILM, AND METAL CAN**

(30) Priority: 13.06.2023 JP 2023097261
(71) Applicant: TOYOBO MC Corporation, Osaka-shi, Osaka 530-0001 (JP)
(72) Inventor: MIEDA, Hiroyuki, Otsu-shi, Shiga 520-0292 (JP); KANDA, Ryosuke, Otsu-shi, Shiga 520-0292 (JP)
(74) Representative: Müller-Boré & Partner Patentanwälte PartG mbB
(86) International application number: PCT/JP2024/018482
(87) International publication number: WO 2024/257553

(57) **Abstract**

An object of the present invention is to provide: a crystalline polyester resin aqueous dispersion that contains substantially no curing agent and that is therefore free from harmful substances such as bisphenol A and formaldehyde, wherein the crystalline polyester resin therein exhibits excellent solvent solubility and is therefore able to be formed into an aqueous dispersion with a relatively small usage of an organic solvent, and wherein the crystalline polyester resin aqueous dispersion is capable of forming a coating film that exhibits excellent properties such as processability and retort resistance; a coating composition containing the crystalline polyester resin aqueous dispersion; a coating film obtained from the coating composition; and a metal can containing the coating film. The crystalline polyester resin aqueous dispersion containing a crystalline polyester resin (A) described below. Crystalline polyester resin (A): the crystalline polyester resin containing a polycarboxylic acid component and a polyalcohol component as copolymerization components, wherein the crystalline polyester resin contains 75 mol% or more of terephthalic acid as the polycarboxylic acid component, and 55 mol% or more of 1,6-hexanediol as the polyalcohol component, wherein the crystalline polyester resin has an acid value of 180 eq/ton or more, and wherein the crystalline polyester resin has a melting point of 120 to 160°C.

## Description

### Technical Field

The present invention relates to a crystalline polyester resin aqueous dispersion. In detail, the present invention relates to a crystalline polyester resin aqueous dispersion suitable for a coating for cans, in more detail a crystalline polyester resin aqueous dispersion suitable for covering cans housing beverages and food (hereinafter, collectively called "food and drink"), and to a coating composition that contains the crystalline polyester resin aqueous dispersion, a coating film that is formed from the coating composition, and a metal can that contains the coating film.

### Background Art

Metal cans such as a beverage can and a food can are coated with an organic resin so as to prevent corrosion of metal (corrosion resistance) caused by food and so as not to impair flavor and taste of the contents (flavor properties). On a coating film formed by this coating, high-load processing such as necking and threading is performed in a step of forming a metal top portion of a bottle can. Accordingly, the coating film is required to exhibit resistance to such post processing (processability). The coating film is further required to exhibit adhesiveness to a metal material, curing properties, and the like. Further, the coating film is, in some cases, exposed to high-temperature and high-humidity conditions of retort sterilization or the like, depending on the use thereof. Even in such cases, the coating film is required not only to maintain adhesiveness to a metal material but also to cause no whitening (retort resistance).

Conventionally, as to a coating exhibiting the corrosion resistance and the flavor properties and tolerating a can forming process, widely used are epoxy-based coatings such as an epoxy phenolic coating, an epoxy-amino-based coating, and an epoxy acrylic coating; polyester-based coatings such as a polyester phenolic coating, a polyester-amino-based coating, and polyester-isocyanate-based coating; and vinyl chloride-based coatings. Recent study, however, has reported possibility that bisphenol A that is a raw material for epoxy resins affects estrogen action and brains of fetuses and infants. The vinyl chloride-based coatings also have a problem of a stabilizer and a problem of generating dioxin in incineration. Formaldehyde is used as a raw material for phenolic resins, amino resins, and the like and remains in the coating. Formaldehyde is known to have harmful effects on human bodies, such as carcinogenic properties, and adversely affect the flavor properties of the contents. Similarly, an isocyanate resin is known to have harmful effects on human bodies, such as carcinogenic properties. Further, there is also a concern about environmental contamination and influence on environment of work caused by the use of an organic solvent.

Due to such concerns about various adverse effects on human bodies, an aqueous coating that is not based on these raw materials is desired in the market. However, in practice, a coating that has performance satisfactory enough for application to cans has not been obtained. Further, even in the cases of an aqueous coating, an organic solvent is needed in a step of forming a resin into an aqueous dispersion. Due to the concerns about adverse effects on environment pollution and the like, an aqueous coating that can be prepared with only a small usage of an organic solvent has been required.

From this viewpoint, there is proposed, as a resin composition for metal containers or metal lids, for example, an aqueous coating composition obtained by dispersing an acrylic modified polyester resin and a β-hydroxyalkylamide crosslinking agent in an aqueous medium, wherein the acrylic modified polyester resin is obtained by graft polymerization of a polyester resin that has an ethylenic double bond in a terminal portion thereof, with a polymerizable unsaturated monomer component (Patent Document 1).

On the other hand, Patent Document 2 proposes a method for producing a crystalline polyester resin aqueous dispersion which is utilized for producing toner for electrostatic charge image development.

### Prior Art Documents

### Patent Documents

Patent Document 1: Japanese Patent Application Laid-Open (JP-A) No. 2020-79393
Patent Document 2: Japanese Patent Application Laid-Open (JP-A) No. 2018-123249

### Disclosure of the Invention

### Problem that the Invention is to Solve

However, the use of the high-acid-value acrylic modified polyester resin described in Patent Document 1 could not give sufficient processability. In addition, there has been a problem that an unreacted portion of the β-hydroxyalkylamide crosslinking agent is left in the coating film and the retort resistance is decreased. In Patent Document 2, the crystalline polyester resins described therein are for producing toner for electrostatic charge image development and have low melting points. Accordingly, it has been found that the retort resistance of the crystalline polyester resins described in Patent Document 2 is poor when used as a resin composition for metal containers or metal lids. Further, when the melting point of the crystalline polyester resin described in Patent Document 2 is increased so as to improve the retort resistance, the solvent solubility is deteriorated and the crystalline polyester resin cannot be formed into an aqueous dispersion.

An object of the present invention is to provide: a crystalline polyester resin aqueous dispersion that contains substantially no curing agent and that is therefore free from harmful substances such as bisphenol A and formaldehyde, wherein the crystalline polyester resin therein exhibits excellent solvent solubility and is therefore able to be formed into an aqueous dispersion with a relatively small usage of an organic solvent, and wherein the crystalline polyester resin aqueous dispersion is capable of forming a coating film that exhibits excellent properties such as processability and retort resistance; a coating composition containing the crystalline polyester resin aqueous dispersion; a coating film obtained from the coating composition; and a metal can containing the coating film. Particularly, the object of the present invention is to provide: an aqueous dispersion that contains the crystalline polyester resin as a base component, wherein both excellent retort resistance of the coating film using the aqueous dispersion and excellent solvent solubility of the crystalline polyester resin are achieved; a coating composition containing the aqueous dispersion; a coating film obtained from the coating composition; and a metal can containing the coating film.

### Means for Solving the Problem

As a result of earnest studies to achieve the object, the inventors of the present invention have found that by using specific materials respectively as a polyvalent carboxylic acid component and a polyhydric alcohol component of the crystalline polyester resin, the crystalline polyester resin can have the molecular planarity and symmetry thereof partially broken while maintaining a certain level of crystallinity; as a result, a coating film obtained from the crystalline polyester resin aqueous dispersion exhibits both satisfactory processability and satisfactory retort resistance; and further, the resin can exhibit satisfactory solvent solubility required when formed into the aqueous dispersion. Further, the inventors have found that the acid value and the melting point of the crystalline polyester resin are also important factors, and that by setting these factors to specific ranges, all of the retort resistance, the processability, and the solvent solubility can be achieved at higher levels. On the basis of these findings, the inventors have completed the present invention. That is, the present invention comprises the following aspects.
[1] A crystalline polyester resin aqueous dispersion containing a crystalline polyester resin (A) described below.
   Crystalline polyester resin (A): the crystalline polyester resin containing a polycarboxylic acid component and a polyalcohol component as copolymerization components, wherein the crystalline polyester resin contains 75 mol% or more of terephthalic acid as the polycarboxylic acid component, and 55 mol% or more of 1,6-hexanediol as the polyalcohol component, wherein the crystalline polyester resin has an acid value of 180 eq/ton or more, and wherein the crystalline polyester resin has a melting point of 120 to 160°C.
[2] The crystalline polyester resin aqueous dispersion according to [1], wherein a concentration of a metal sulfonate salt in the crystalline polyester resin (A) is less than 50 eq/ton.
[3] A coating composition containing the crystalline polyester resin aqueous dispersion according to [1] or [2], wherein a content of a curing agent in the coating composition is less than 1 part by mass, relative to 100 parts by mass of solid content of the crystalline polyester resin (A) in the crystalline polyester resin aqueous dispersion.
[4] A coating film obtained from the coating composition according to [3].
[5] A metal can containing the coating film according to [4].

### Effects of the Invention

The crystalline polyester resin aqueous dispersion according to the present invention contains therein a crystalline polyester resin that has the above-described composition and therefore that exhibits excellent solvent solubility when formed into an aqueous dispersion. The crystalline polyester resin aqueous dispersion according to the present invention is capable of, without containing any curing agent, forming a coating film that exhibits excellent properties such as processability and retort resistance. The crystalline polyester resin aqueous dispersion according to the present invention is free from the harmful substance such as bisphenol A and formaldehyde. Therefore, the crystalline polyester resin aqueous dispersion according to the present invention is suitable for a coating composition used for beverage cans and food cans, a coating film, and a metal can.

### Mode for Carrying Out the Invention

As hereunder, an embodiment of the present invention will be explained in detail.

### <Crystalline polyester resin (A)>

The crystalline polyester resin (A) of the present invention has a chemical structure that can be obtained from a polycondensation product of a polycarboxylic acid and a polyalcohol, wherein the polycarboxylic acid and the polyalcohol each contains one or two or more selected components.

When the total amount of the polycarboxylic acid component used in the present invention is defined as 100 mol%, the copolymerization proportion of the terephthalic acid needs to be 75 mol% or more. The copolymerization proportion of the terephthalic acid is preferably 80 mol% or more, and more preferably 85 mol% or more. By setting the copolymerization proportion of the terephthalic acid to 75 mol% or more, the obtained polyester exhibits increased crystallinity and has its high glass transition temperature, and the coating film exhibits good retort resistance.

A polycarboxylic acid component, other than the terephthalic acid, used in the present invention is not particularly limited, and, for example, polycarboxylic acids or esters thereof, and anhydrides thereof described below can be used.

As to the polycarboxylic acid component, other than the terephthalic acid, used in the present invention, it is possible to use a dicarboxylic acid (a) that has a ring structure (hereinafter, referred to as a "component (a)"), wherein the component (a) has carboxylic acid groups at the 2,6-positions when the ring is a naphthalene ring, and at the 1,4-positions when the ring is a cyclohexyl ring. The carboxylic acid group of the component (a) is preferred to be directly bonded to the ring structure. Examples of the component (a) include 2,6-naphthalenedicarboxylic acid, and 1,4-cyclohexanedicarboxylic acid. One or two or more thereof can be used.

The polycarboxylic acid component used in the present invention preferably contains the component (a). By using the polycarboxylic acid component containing the component (a), the polyester resin can be improved in solvent solubility without greatly impairing its crystallinity. Among examples of the component (a), more preferred is a dicarboxylic acid that has a naphthalene ring as the ring structure and that has carboxylic acid groups at the 2,6-positions. This is because these dicarboxylic acids have less steric hindrance and can easily maintain crystallinity.

When the total amount of the polycarboxylic acid component is defined as 100 mol%, the copolymerization proportion (mol%) of the component (a) is preferably 5 to 20 mol%, more preferably 8 to 18 mol%, and further preferably 10 to 15 mol%. By setting the copolymerization proportion of the component (a) to 5 mol% or more, the obtained polyester may exhibit good solvent solubility, and thus a stable crystalline polyester resin aqueous dispersion may be obtained. By setting the copolymerization proportion of the component (a) to 20 mol% or less, the obtained polyester may have its appropriate glass transition temperature, and both the retort resistance and the processability may be achieved in the coating film.

Examples of the polycarboxylic acid component, other than the terephthalic acid, used in the present invention include a dicarboxylic acid (b) that has a ring structure (hereinafter, referred to as a "component (b)"), excluding the component (a). The ring structure of the component (b) is preferably a benzene ring, a furan ring, a naphthalene ring, or a cyclohexyl ring. Carboxylic acid groups of the component (b) are preferred to be directly bonded to the ring structure. Examples of the component (b) include isophthalic acid, 1,2-naphthalenedicarboxylic acid, 1,3-naphthalenedicarboxylic acid, 1,4-naphthalenedicarboxylic acid, 1,5-naphthalenedicarboxylic acid, 1,6-naphthalenedicarboxylic acid, 1,7-naphthalenedicarboxylic acid, 1,8-naphthalenedicarboxylic acid, 2,3-naphthalenedicarboxylic acid, 2,7-naphthalenedicarboxylic acid, sodium 5-sulfoisophthalate, 2,5-furandicarboxylic acid, 1,2-cyclohexanedicarboxylic acid, 1,3-cyclohexanedicarboxylic acid, and hexahydrophthalic acid. One or two or more thereof can be used.

The component (b) is an optional component. When the total amount of the polycarboxylic acid component is defined as 100 mol%, the copolymerization proportion of the component (b) is preferably 20 mol% or less, more preferably 15 mol% or less, and further preferably 10 mol% or less, and may be even 0 mol%. By setting the copolymerization proportion of the component (b) to 20 mol% or less, the obtained polyester may exhibit good retort resistance.

When the component (b) is used, the total of the copolymerization proportions (mol%) of the component (a) and the component (b) is preferably 5 to 20 mol%, more preferably 8 to 18 mol%, and further preferably 10 to 15 mol%, provided that the total amount of the polycarboxylic acid component is defined as 100 mol%. By setting the total of the copolymerization proportions of the component (a) and the component (b) to 5 mol% or more, the obtained polyester may be improved in solvent solubility. By setting the total of the copolymerization proportions of the component (a) and the component (b) to 20 mol% or less, the obtained polyester may be improved in retort resistance.

As to the polycarboxylic acid component, other than the terephthalic acid, used in the present invention, an aliphatic polycarboxylic acid, an alicyclic polycarboxylic acid, an aromatic polycarboxylic acid, or the like, other than the component (a) or (b) can also be used. Examples of the aliphatic polycarboxylic acid include fumaric acid, adipic acid, sebacic acid, malonic acid, and succinic acid. Examples of the alicyclic polycarboxylic acid and the aromatic polycarboxylic acid include tri- or more functional carboxylic acids. One or two or more thereof can be used.

The polyalcohol component used in the present invention contains 1,6-hexanediol. The straight-chain structure and the alkyl chain length of the 1,6-hexanediol contribute to the solvent solubility, and high crystallinity that causes the excellent retort resistance and the excellent processability.

When the total amount of the polyalcohol component is defined as 100 mol%, the copolymerization proportion of the 1,6-hexanediol needs to be 55 mol% or more. The copolymerization proportion of the 1,6-hexanediol is more preferably 60 mol% or more, further preferably 65 mol% or more, and particularly preferably 70 mol% or more. By setting the copolymerization proportion of the 1,6-hexanediol to 55 mol% or more, the obtained polyester exhibits high crystallinity and good retort resistance. In addition, the obtained polyester is improved in processability and solvent solubility. The copolymerization proportion of the 1,6-hexanediol is preferably 90 mol% or less, and more preferably 80 mol% or less. By setting the copolymerization proportion of the 1,6-hexanediol to 90 mol% or less, the obtained polyester may be improved in solvent solubility, and a stable crystalline polyester resin aqueous dispersion may be obtained.

A polyalcohol component, other than the 1,6-hexanediol, used in the present invention is not particularly limited, and specific examples of the polyalcohol component include a polyalcohol (c) that has a side chain (hereinafter, referred to as a "component (c)"). The component (c) is preferably a diol that has a side chain. The side chain of the component (c) refers to an atom or group of atoms branched from a main chain which is a hydrocarbon group (carbon chain) connecting two hydroxyl groups. The side chain of the component (c) is preferably an alkyl group. The alkyl group has preferably 1 to 50 carbon atoms, more preferably 2 to 40 carbon atoms, and further preferably 3 to 35 carbon atoms. The component (c) may have one side chain or two or more side chains, and may have preferably five or less side chains, more preferably four or less side chains, and further preferably three or less side chains. The alkyl group may be a straight chain or may have a side chain. Examples of the component (c) include 1,2-propylene glycol, 1,2-butanediol, 1,3-butanediol, 2-methyl-1,3-propanediol, neopentyl glycol, 3-methyl-1,5-pentanediol, 2-methyl-1,3-hexanediol, 2-methyl-2-ethyl-1,3-propanediol, 2,2-diethyl-1,3-propanediol, 2-ethyl-2-n-propyl-1,3-propanediol, 2,2-di-n-propyl-1,3-propanediol, 2-n-butyl-2-ethyl-1,3-propanediol, 2,2-di-n-butyl-1,3-propanediol, 2,4-diethyl-1,5-pentanediol, 2-ethyl-1,3-hexanediol, mannitol, sorbitol, dimer diol, polypropylene glycol, and pentaerythritol. One or two or more thereof may be used as the component (c).

The component (c) is an optional component. When the total amount of the polyalcohol component is defined as 100 mol%, the copolymerization proportion of the component (c) is preferably 20 mol% or less, more preferably 15 mol% or less, and further preferably 10 mol% or less, and may be even 0 mol%. By setting the copolymerization proportion of the component (c) to 20 mol% or less, the obtained polyester may exhibit both the good solvent solubility and the good retort resistance.

Examples of the polyalcohol component, other than the 1,6-hexanediol, used in the present invention include a polyalcohol (d) that has a straight-chain structure (hereinafter, referred to as a "component (d)"). Examples of the component (d) include ethylene glycol, 1,3-propylene glycol, 1,4-butanediol, 1,5-pentanediol, and 1,8-octanediol, and one or two or more thereof can be used.

The component (d) is an optional component. When the total amount of the polyalcohol component is defined as 100 mol%, the copolymerization proportion of the component (d) is preferably 40 mol% or less, more preferably 30 mol% or less, and further preferably 20 mol% or less, and may be even 0 mol%. By setting the copolymerization proportion of the component (d) to 20 mol% or less, the obtained polyester may exhibit both the good solvent solubility and the good retort resistance.

Examples of the polyalcohol component, other than the 1,6-hexanediol, used in the present invention include a polyalcohol (e) that has an aromatic ring skeleton or an alicyclic skeleton (hereinafter, referred to as a "component (e)"). Examples of the component (e) include 1,4-cyclohexanedimethanol, tricyclodecanedimethanol, hydroquinone, catechol, and resorcinol, and one or two or more thereof can be used.

The component (e) is an optional component. When the total amount of the polyalcohol component is defined as 100 mol%, the copolymerization proportion of the component (e) is preferably 30 mol% or less, more preferably 25 mol% or less, and further preferably 20 mol% or less, and may be even 0 mol%. By setting the copolymerization proportion of the component (e) to 30 mol% or less, the obtained polyester may exhibit both the good solvent solubility and the good retort resistance.

When isosorbide is used as the polyalcohol component, other than the 1,6-hexanediol, used in the present invention, the copolymerization proportion of the isosorbide is preferably less than 5 mol%, more preferably less than 1 mol%. Most preferably, the polyalcohol component does not contain any isosorbide. By setting the copolymerization proportion of the isosorbide to less than 5 mol%, the obtained polyester may be improved in the solvent solubility and the retort resistance.

As to the polycarboxylic acid component and the polyalcohol component that constitute the crystalline polyester resin (A) in the present invention, a raw material derived from a biomass resource can be used. The biomass resource includes, for example: something in the form of starch, cellulose, or the like into which sunlight energy is converted by plant photosynthesis and which stores the sunlight energy; animals that grow by eating plants; and products obtained by processing plants and animals. More preferred among these biomass resources is a plant resource, and examples of the plant resource include wood, rice straw, rice hull, rice bran, old rice, corn, sugar cane, cassava, sago palms, tofu refuse, corn cobs, tapioca refuse, bagasse, vegetable oil refuse, potatoes, buckwheat, soybeans, oils and fats, waste paper, papermaking residues, marine product residues, livestock wastes, sludge, and food wastes. Corn, sugar cane, cassava, and sago palms are more preferable.

Specific examples of a polycarboxylic acid raw material derived from a biomass resource include adipic acid, sebacic acid, fumaric acid, itaconic acid, terephthalic acid, and 2,5-furandicarboxylic acid. These may be used singly or in a mixture of two or more thereof.

Specific examples of a polyalcohol raw material derived from a biomass resource include ethylene glycol, 1,2-propylene glycol, 1,3-propylene glycol, neopentyl glycol, 1,4-butanediol, and 1,4-cyclohexanedimethanol. These may be used singly or in a mixture of two or more thereof.

The crystalline polyester resin (A) in the present invention preferably has a branched structure. Having a branched structure refers to having a branched structure in the main chain of polyester. For introducing a branched structure into the polyester, there is, for example, a method for copolymerizing a trifunctional or higher-functional component as part of the polycarboxylic acid component and/or the polyalcohol component in a polycondensation reaction of the polyester. As to a trifunctional or higher-functional polycarboxylic acid component, polycarboxylic acids or esters thereof, and polycarboxylic anhydrides described below can be used. Specifically, examples thereof include trimellitic acid, pyromellitic acid, and benzophenonetetracarboxylic acid. Examples of a trifunctional or higher-functional polyalcohol component include glycerine, trimethylolethane, trimethylolpropane, mannitol, sorbitol, and pentaerythritol. One or two or more thereof can be used. When the crystalline polyester resin (A) has a branched structure, the obtained coating film may exhibit good processability.

The trifunctional or higher-functional polycarboxylic acid component and/or the trifunctional or higher-functional polyalcohol component are/is preferably 0.3 mol% or more, more preferably 0.4 mol% or more, and further more preferably 0.5 mol% or more, to the total crystalline polyester resin (A) defined as 100 mol%. The trifunctional or higher-functional polycarboxylic acid component and/or the trifunctional or higher-functional polyalcohol component are/is preferably 2 mol% or less, more preferably 1.5 mol% or less, further more preferably 1 mol% or less, and particularly preferably 0.8 mol% or less, to the total crystalline polyester resin (A) defined as 100 mol%. When the content(s) of the trifunctional or higher-functional polycarboxylic acid component and/or the trifunctional or higher-functional polyalcohol component are/is each more than the above range, crystallinity of the crystalline polyester resin (A) may be decreased, resulting in a deterioration of retort resistance or gelation generated during polymerization of polyester in some cases.

The acid value of the crystalline polyester resin (A) in the present invention can be imparted by any method. Examples of a method for imparting an acid value include a method for adding and reacting a compound that has a polycarboxylic anhydride group in a molecule thereof in a late stage of polycondensation, and a method for forming a high-acid-value prepolymer (oligomer), and next subjecting the prepolymer to polycondensation so as to obtain a polyester resin that has an acid value. Due to easiness of operation and easiness of obtaining a target acid value, the former adding and reacting method is preferable.

Among the compounds containing a polycarboxylic anhydride group in a molecule thereof for imparting an acid value to the crystalline polyester resin (A) in the present invention, examples of a carboxylic monoanhydride include phthalic anhydride, succinic anhydride, maleic anhydride, trimellitic anhydride, itaconic anhydride, and citraconic anhydride. One or two or more can be selected from among these examples and used. Among these examples, trimellitic anhydride is preferable from the aspect of versatility and economic efficiency.

Among the compounds containing a polycarboxylic anhydride group in a molecule thereof for imparting an acid value to the crystalline polyester resin (A) in the present invention, examples of a carboxylic polyanhydride include pyromellitic anhydride, 1,2,3,4-butanetetracarboxylic dianhydride, 1,2,3,4-cyclopentanetetracarboxylic dianhydride, 3,3',4,4'-benzophenonetetracarboxylic dianhydride, 2,3,6,7-naphthalenetetracarboxylic dianhydride, ethylene glycol bistrimellitate dianhydride, and 2,2',3,3'-biphenyltetracarboxylic dianhydride. One or two or more can be selected from among these examples and used. Among these examples, ethylene glycol bistrimellitate dianhydride is preferable from the aspect of versatility and economic efficiency.

As to the compounds containing a polycarboxylic anhydride group in a molecule thereof for imparting an acid value, a carboxylic monoanhydride and carboxylic polyanhydride can be used singly or in combination.

The acid value of crystalline polyester resin (A) in the present invention needs to be 180 eq/ton or more. The acid value is preferably 200 eq/ton or more, more preferably 220 eq/ton or more, and further preferably 250 eq/ton or more. By setting an acid value of the above lower limit value or more, sufficient aqueous dispersion stability can be ensured. The upper limit value of the acid value of the polyester resin (A) is not particularly limited, and the polyester resin (A) preferably has an acid value of 400 eq/ton or less so as to reduce unreacted portions of the acid components in an acid addition reaction and the amount of oligomers.

The concentration of a metal sulfonate salt in the crystalline polyester resin (A) in the present invention is preferably less than 50 eq/ton, more preferably 20 eq/ton or less, further preferably 10 eq/ton or less, particularly preferably 5 eq/ton or less. By setting the concentration of the metal sulfonate salt to less than 50 eq/ton, the obtained polyester may exhibit lowered hydrophilicity and the retort resistance may be improved.

Next, a method for producing the crystalline polyester resin (A) according to the present invention is described. In an esterification/exchange reaction, all the monomer components and/or low polymers thereof are heated and melted, and thus reacted. The esterification/exchange temperature is preferably 180 to 250°C, and more preferably 200 to 250°C. The reaction time is preferably 1.5 to 10 hours, and more preferably 3 to 6 hours. The reaction time refers to a time from reaching a desired reaction temperature until the following polycondensation reaction. In the polycondensation reaction, a polyalcohol component is distilled away under reduced pressure at a temperature of 220 to 280°C from an esterified product obtained by the esterification reaction, and the polycondensation reaction is progressed until reaching a desired molecular weight. The polycondensation reaction temperature is preferably 220 to 280°C, and more preferably 240 to 275°C. The degree of decompression is preferably 130 Pa or less. An insufficient degree of decompression tends to prolong the polycondensation time and is therefore not preferable. The pressure is preferred to be gradually reduced over 30 to 180 minutes that are the decompression time from atmospheric pressure to reaching 130 Pa or less.

In the esterification/exchange reaction and the polycondensation reaction, polymerization is performed using as necessary an organic titanate compound such as tetrabutyl titanate, germanium dioxide, antimony oxide, and an organic tin compound such as tin octylate. An organic titanate compound is preferable from the aspect of reaction activity, and germanium dioxide is preferable from the aspect of coloring of resin.

The crystalline polyester resin (A) in the present invention has a glass transition temperature of preferably 10°C or more, and more preferably 15°C or more, in terms of water resistance, particularly retort resistance of the coating film. In terms of processability, the glass transition temperature is preferably 40°C or less, and more preferably 35°C or less.

The melting point (Tm) of the crystalline polyester resin (A) in the present invention is a temperature at the top of an endothermic peak that has the greatest heat of fusion in a heating process performed by heating the polyester resin from -50 to 200°C at 20°C/min, with use of a differential scanning calorimeter (DSC), after subjecting the polyester resin to an aging treatment at 100°C for 30 hours. The range of the melting point (Tm) of the crystalline polyester resin (A) in the present invention is 120 to 160°C, preferably 125 to 155°C, more preferably 130 to 150°C, and further preferably 135 to 145°C. By setting the melting point to 120°C or higher, the crystallinity becomes good and excellent retort resistance is exhibited. By setting the melting point to 160°C or lower, excellent processability and solvent solubility are exhibited.

In the present invention, a polyester resin exhibiting a crystallinity means a polyester resin having a melting point (Tm) when the polyester resin is measured under the above conditions. The polyester resin that exhibits a high crystallinity has a high melting point.

The crystalline polyester resin (A) of the present invention has a reduced viscosity of preferably 0.2 to 0.8 dl/g, more preferably 0.4 to 0.8 dl/g, and further preferably 0.6 to 0.8 dl/g. When the crystalline polyester resin (A) has a reduced viscosity of 0.2 dl/g or less, the coating film may exhibit lower toughness and may lack processability. On the other hand, when the crystalline polyester resin (A) has a reduced viscosity of 0.8 dl/g or more, the crystalline polyester resin may exhibit lower solvent solubility.

### <Crystalline polyester resin aqueous dispersion>

The crystalline polyester resin aqueous dispersion according to the present invention can be prepared by, for example, a dispersion method (a) for dissolving the crystalline polyester resin (A) in a water-soluble organic solvent capable of dissolving the crystalline polyester resin (A) and successively adding a basic compound as necessary and water; and a dispersion method (b) for mixing the crystalline polyester resin (A), water, a water-soluble organic solvent capable of dissolving the crystalline polyester resin (A), and a basic compound as necessary, and heating the mixture. Alternatively, when the amount of an organic solvent is desired to be reduced or when an aqueous dispersion is desired to be formed by completely removing an organic solvent, it is possible to perform a dispersion process by using an organic solvent that has a boiling point of 100°C or less, and then extract the solvent by heating or under reduced pressure. The crystalline polyester resin is preferred to be dispersed by the former method (a) in terms of film-forming properties.

In this case, the temperature of the organic solvent during the dissolution of the crystalline polyester resin (A) is preferably 40 to 160°C, more preferably 50 to 140°C, further more preferably 60 to 130°C, and most preferably 70 to 100°C. When the temperature is less than 40°C, the dissolution of the crystalline polyester resin (A) is sometimes insufficient and therefore the entanglement of molecular chains cannot sufficiently be resolved. When the temperature is more than 160°C, the possibility of causing degradation of the crystalline polyester resin (A) may be increased. Examples of the organic solvent capable of dissolving the crystalline polyester resin (A) by being heated in a temperature range of 40 to 160°C include methyl ethyl ketone, cyclohexanone, dimethylacetamide, dimethylformamide, N-methylpyrrolidone, tetrahydrofuran, 1,4-dioxane, 1,3-dioxane, 1,3-dioxolane, 1,2-hexanediol, methyl cellosolve, butyl cellosolve, ethyl carbitol, butyl carbitol, propylene glycol monomethyl ether, propylene glycol monopropyl ether, propylene glycol monobutyl ether, and triethylene glycol monobutyl ether. Among these examples, methyl ethyl ketone, butyl cellosolve, propylene glycol monopropyl ether, propylene glycol monobutyl ether, and 2-propanol are preferable.

When the crystalline polyester resin (A) is dissolved at 100°C or more, it is required to cool the crystalline polyester resin solution to a temperature of 100°C or less and successively to add water and a basic compound as necessary to the resin solution under stirring, and thus to perform phase transition so as to obtain an aqueous dispersion.

As to the basic compound used when the crystalline polyester resin (A) of the present invention is formed into an aqueous dispersion, preferable one is a compound that volatilizes in a drying or baking step during the formation of the coating film. For example, ammonia and/or an organic amine compound having a boiling point of 250°C or less may be used. Preferable examples of the basic compound include triethylamine, N,N-diethylethanolamine, N,N-dimethylethanolamine, aminoethanolamine, N-methyl-N,N-diethanolamine, isopropylamine, iminobispropylamine, ethylamine, diethylamine, 3-ethoxypropylamine, 3-diethylaminopropylamine, sec-butylamine, propylamine, methylaminopropylamine, dimethylaminopropylamine, methyliminobispropylamine, 3-methoxypropylamine, monoethanolamine, diethanolamine, triethanolamine, morpholine, N-methylmorpholine, and N-ethylmorpholine. These basic compounds need to be added in an amount that can at least partially neutralize the carboxyl groups of the crystalline polyester resin (A). Specifically, the basic compound is desired to be added in 0.5 to 1.5 equivalents with respect to the carboxyl group equivalent.

The average particle size of the crystalline polyester resin aqueous dispersion according to the present invention is very important because it may greatly affect the appearance of the coating film and the storage stability. The average particle size is preferably 30 to 300 nm, more preferably 50 to 250 nm, and particularly preferably 70 to 200 nm. When the average particle size is more than 300 nm, not only the dispersion stability may be greatly decreased, but also the film-forming properties may be decreased, and therefore the appearance of the obtained coat may be degraded. Conversely, when the average particle size is less than 30 nm, the film-forming properties tend to be remarkably improved, but fusion and aggregation between dispersed particles may occur due to this tendency, and thereby may increase the possibility of thickening and dispersion failure.

The crystalline polyester resin aqueous dispersion according to the present invention is preferably prepared at a resin solid content concentration of 10 to 45 mass%, more preferably 15 to 40 mass%, and further more preferably 20 to 35 mass%. When the crystalline polyester resin aqueous dispersion has a resin solid content concentration of more than 45 mass%, it has high viscosity. In addition, aggregation between resin particles in the crystalline polyester resin aqueous dispersion is likely to occur. Therefore, the dispersion stability may be considerably decreased. When the crystalline polyester resin aqueous dispersion has a resin solid content concentration of less than 10 mass%, it cannot be said to be practical in terms of both production and application.

The coating composition according to the present invention contains at least the crystalline polyester resin aqueous dispersion described above. The coating composition contains, as a main agent, the crystalline polyester resin (A) in the aqueous dispersion. The "main agent" is defined as a component contained in the highest content (mass proportion) among the solid components forming a coating film (non-volatile components except water and volatile substances such as the organic solvent) in the coating composition.

The coating composition according to the present invention is capable of forming a coating film by containing singly the crystalline polyester resin aqueous dispersion, without having a curing agent blended therein. Therefore, the coating composition according to the present invention preferably contains substantially no curing agent. That is, the content of a curing agent is preferably less than 1 part by mass (in terms of solid content) relative to 100 parts by mass (in terms of solid content) of the crystalline polyester resin (A) in the aqueous dispersion.

The content of the curing agent in the coating composition of the present invention is preferably less than 1 part by mass relative to 100 parts by mass (in terms of solid content) of the crystalline polyester resin (A). The content of the curing agent is more preferably less than 0.5 part by mass, and further more preferably less than 0.1 part by mass. Most preferably, no curing agent is contained. When the content of the curing agent is more than the above range, the polyester resin composition may not only have poor economic efficiency but may also possibly exhibit low processability caused by a self condensation reaction of the curing agent, generate a harmful outgas such as a volatile of a blocking agent and formaldehyde, and exhibit poor long storage stability.

Here, the curing agent refers to any conventionally-known curing agent that reacts with the polyester resin and thus forms a crosslinking structure. Examples of a form of the crosslinking structure include: a reaction of generating an intermolecular carbon-carbon bond by reacting an unsaturated double bond in the polyester resin through a radical addition reaction, a cationic addition reaction, an anionic addition reaction, or the like; and formation of an intermolecular bond through a condensation reaction, a polyaddition reaction, a transesterification reaction, or the like with a polyvalent carboxylic acid group or a polyhydric alcohol group in the polyester resin. Examples of the curing agent include a phenolic resin, an amino resin, an isocyanate compound, an epoxy compound, a β-hydroxylamide compound, and an unsaturated bond-containing resin.

The coating composition according to the present invention is optimal for a coating for food or beverage cans. For the use as a coating for food or beverage cans, various additives may be blended according to the purpose thereof. As far as the purpose of the coating film according to the present invention such as food sanitation and flavor properties is not impaired, it is possible to blend a plasticizer for improving the solubility in the organic solvent, a leveling agent or surfactant for improving application properties and smoothness and appearance of the coating film, a lubricant for preventing scratches of the coating film, further a coloring pigment, in some cases a polyester resin other than the crystalline polyester resin of the present invention, or a resin other than polyester resins, for example, an acrylic resin emulsion and a polyurethane resin emulsion.

The coating composition according to the present invention can also have blended thereto other resin for the purpose of modification such as imparting of flexibility and adhesion of the coating film. Examples of the other resin include amorphous polyester, crystalline polyester, an ethylene-polymerizable unsaturated carboxylic acid copolymer, and an ethylene-polymerizable carboxylic acid copolymer ionomer. By blending at least one resin selected from these examples, the flexibility and/or the adhesion may be imparted to the coating film.

The coating composition according to the present invention can be applied to a metal base material for cans, such as aluminum, stainless steel, and tinplate, by a gravure coater, a comma coater, or spraying. The coating film thickness is not particularly limited, but usually the dried film thickness is preferably in a range of 3 to 18 µm, and more preferably in a range of 5 to 15 µm. The conditions for baking the coating film are usually a temperature range of about 180 to 260°C and a time of about 20 seconds to 1 hour, and more preferably a temperature range of about 200 to 240°C and a time of about 30 seconds to 10 minutes.

The coating film formed of the crystalline polyester resin aqueous dispersion according to the present invention is preferably subjected to an aging treatment after baked in the range described above. By performing the aging treatment, the crystallization in the coating film may be further progressed and may exhibit good retort resistance.

The coating film according to the present invention is one formed by coating a base material with the crystalline polyester resin aqueous dispersion (two layers of a base material/the crystalline polyester resin aqueous dispersion). The coating film may have a structure obtained by laying a layer formed of other resin on or beneath the crystalline polyester resin aqueous dispersion layer. In that case, the layer formed of other resin refers to a coating layer. The coating film according to the present invention can be obtained by stacking the crystalline polyester resin aqueous dispersion according to the present invention on any one of various substrates in accordance with an ordinary method, and further stacking other resin layer.

The metal can according to the present invention contains the coating film. The metal can can be obtained by applying the coating film to one surface or both surfaces, or an edge surface as necessary of any metal plate that can be used for cans for, for example, beverages and canned products, lids and caps of the cans, and the like, and that are made from a metal material. Examples of the metal material include tinplate, tin free steel, and aluminum. The metal plates made from these metal materials may be used after preliminarily subjected to a phosphoric acid treatment, a chromic acid chromate treatment, a phosphoric acid chromate treatment, an anticorrosion treatment with other rust-preventive treatment agent, or a surface treatment performed for the purpose of improving the adhesion of the coating film.

### Examples

As hereunder, the present invention will be more specifically illustrated by referring to Examples although the present invention is not limited to those Examples. Evaluations of various properties were carried out in accordance with the following methods. The unit simply represented by "part" means "part by mass", and "%" means "mass%".

### <Crystalline polyester resin (A)>

### (1) Measurement of resin composition

A sample of the crystalline polyester resin was dissolved in deuterated chloroform and subjected to 1H-NMR analysis using nuclear magnetic resonance (NMR) apparatus 400-MR manufactured by Varian Inc. The mole ratio between components of the crystalline polyester resin was obtained from the ratio of integral values in the analysis.

### (2) Measurement of reduced viscosity (unit: dl/g)

A sample (0.1 g) of the crystalline polyester resin was dissolved in 25 cc of a phenol/tetrachloroethane (mass ratio 6/4) mixed solvent, and the reduced viscosity was measured at 30°C using an Ubbelohde's viscometer.

### (3) Measurement of melting point (Tm) and glass transition temperature (Tg)

The measurement was performed using differential scanning calorimeter (DSC) DSC-220 manufactured by Seiko Instruments Inc. The crystalline polyester resin was subjected to an aging treatment, with the aging treatment conditions set to 100°C × 30 hours. A sample (5 mg) of the treated crystalline polyester resin was hermetically sealed in an aluminum container with a lid. A nitrogen gas was flowed thereinto at 30 ml/min to form a nitrogen atmosphere. Then, the sample was cooled to -50°C using liquid nitrogen and next heated to 200°C at 20°C/min. The temperature at the top of the maximum peak of heat of fusion obtained through this process was determined as the melting point (Tm, unit: °C). On the other hand, a sample was, using the measuring device, heated to 200°C under the same conditions, then rapidly cooled to -50°C, and heated again to 200°C at 20°C/min. On the endothermic curve obtained through this process, the temperature at the intersection of the base line before an endothermic peak and the tangent line approaching the endothermic peak was defined as the glass transition temperature (Tg, unit: °C).

### (4) Measurement of acid value

A sample (0.2 g) of the crystalline polyester resin was dissolved in 40 ml of chloroform and titrated with a 0.01 N ethanol solution of potassium hydroxide so as to obtain the equivalent per 10⁶ g (eq/ton) of an acid value of the polyester resin. Phenolphthalein was used as an indicator.

### (5) Evaluation of solvent solubility

A crystalline polyester resin (2 g) was dissolved in 8 g of cyclohexanone and heated (left to stand still) at 100°C for 3 hours. The dissolution state of the crystalline polyester resin was observed by visual inspection and determined as follows.

### (Determination)

∘∘: Almost all the resin dissolved (80% or more dissolved)
∘: A slight amount of the resin left undissolved (70% or more dissolved)
Δ: A small amount of the resin left undissolved (60% or more dissolved)
×: Left undissolved (less than 50%)

### (6) Average particle size

The average particle size of the polyester resin aqueous dispersion was measured. For the measurement, a laser diffraction scattering particle size distribution analyzer (Coulter counter LS13 320 manufactured by Beckman Coulter, Inc.) was used. A particle size distribution based on volume was prepared by the analyzer. The value of the average diameter was defined as the average particle size.

### (7) Evaluation of storage stability

A polyester resin aqueous dispersion was left to stand still at 25°C for 24 hours. Then, the dispersion state was observed by visual inspection and determined as follows.

### (Determination)

oo: No change in appearance
o: Precipitate observed
×: Solidified

### <Preparation of test piece>

The crystalline polyester resin aqueous dispersion was applied to one surface of tinplate (JIS G 3303 (2008) SPTE, 70 mm × 150 mm × 0.3 mm) with a bar coater such that the dried film thickness was 10 ± 2 µm, baked under the baking conditions of 200°C for 30 seconds, and then subjected to an aging treatment at 80°C for 1 hour. The resultant product was used as a test piece (hereinafter, called a "test piece").

### (8) Evaluation of appearance of coating film

The appearance of the coating film of the obtained test piece was determined by visual inspection as follows.

### (Determination)

oo: Neither cracks nor aggregates were generated.
∘: Cracks or aggregates were generated.
Δ: The coating film was partially peeled.
×: The coating film was entirely peeled.

### (9) Evaluation of processability

The obtained test piece was subjected to bending performed at 180° in the direction in which the coating film came outside. Then, the processability was evaluated by measuring the energization value which reflects a degree of a crack generated in the bent portion of the coating film. The bending was performed with nothing held in the bent portion (so-called 0T). An aluminum sheet electrode (width 20 mm, depth 50 mm, thickness 0.5 mm) was prepared on which a sponge (width 20 mm, depth 50 mm, thickness 10 mm) that has been immersed in a 1% aqueous solution of NaCl was placed. A location around the center of the bent portion of the test piece was brought into contact with the sponge in parallel with the 20-mm side of the sponge. A direct-current voltage (5.0 V) was applied between the aluminum sheet electrode and the non-coated portion of the rear surface of the test piece, and the energization value was measured. A smaller energization value means better bending properties.

### (Determination)

oo: less than 0.5 mA
o: 0.5 mA or more and less than 1.0 mA
Δ: 1.0 mA or more and less than 2.0 mA
×: 2.0 mA or more

### (10) Evaluation of retort resistance

The test piece was placed in a standing position in a stainless steel cup, into which ion-exchanged water was poured to the half height of the test piece. The stainless steel cup was set in a pressure vessel of a retort tester (ES-315 manufactured by TOMY KOGYO CO., LTD.) and a retort treatment was performed at 125°C for 30 minutes. The evaluation of the retort resistance after the treatment was conducted for the vapor contact portion of the coating film that is generally considered to be exposed to severer conditions. The whitening and the blister state of the cured film were determined by visual inspection according to the following criteria.

### (Determination)

∘∘: good (without whitening and blister)
o: slight whitening but no blister
Δ: some degree of whitening and/or some blisters
×: remarkable degree of whitening and/or remarkable blisters

### Synthesis of crystalline polyester resin (a)

Into a 3-L four-neck flask were charged 650 parts by mass of terephthalic acid, 870 parts by mass of 1,6-hexanediol, 50 parts by mass of 1,4-cyclohexanedimethanol, and 0.4 part by mass (0.03 mol% relative to the total acid components) of tetra-n-butyl titanate (hereinafter, sometimes abbreviated as TBT) as a catalyst, and the mixture was gradually heated to 240°C over 3 hours and thus subjected to a transesterification reaction. After the completion of the esterification reaction, the system was gradually decompressed to 10 mmHg over 1 hour and polymerized under reduced pressure, and heated to a temperature of 250°C and further subjected to late-stage polymerization under vacuum at 1 mmHg or less for 90 minutes. After the completion of the polycondensation reaction, the system was cooled to 210°C in a nitrogen atmosphere, next had a prescribed amount of trimellitic anhydride charged thereinto, and was subjected to a reaction by stirring in a nitrogen atmosphere at 220°C for 30 minutes. After the completion of the reaction, a resultant product was extracted and a crystalline polyester resin (a) was thus obtained. The obtained crystalline polyester resin (a) had a reduced viscosity of 0.60 dl/g, a glass transition temperature (Tg) of 15°C, a crystalline melting point (Tm) of 155°C, and an acid value of 220 eq/ton.

### Synthesis of crystalline polyester resins (b) to (x)

Similarly to the synthesis of the crystalline polyester resin (a), crystalline polyester resins (b) to (f), (n) to (u), and (x) were prepared by a direct esterification method and crystalline polyester resins (g) to (m) and (v) to (w) by a transesterification method, but each of the ingredient compositions was changed to the resin composition shown in Table 1.

Table 1 shows the compositions and the properties of the crystalline polyester resins.

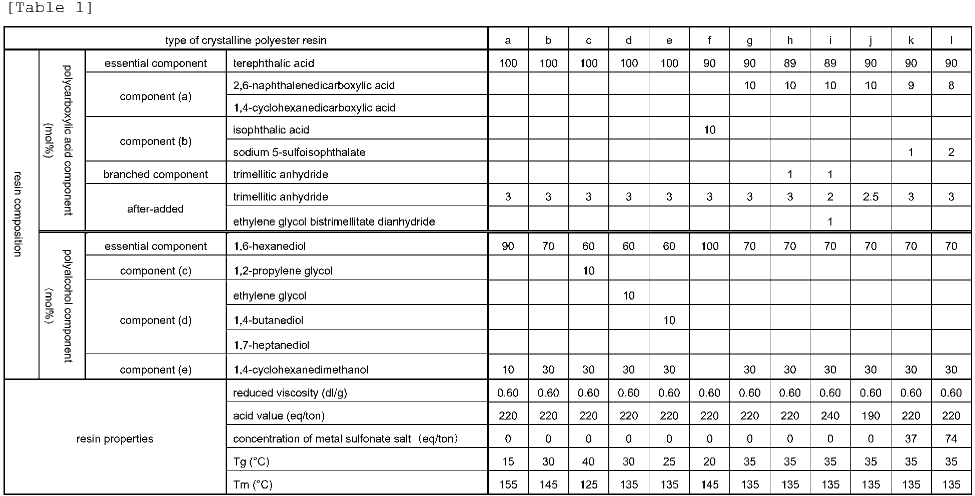

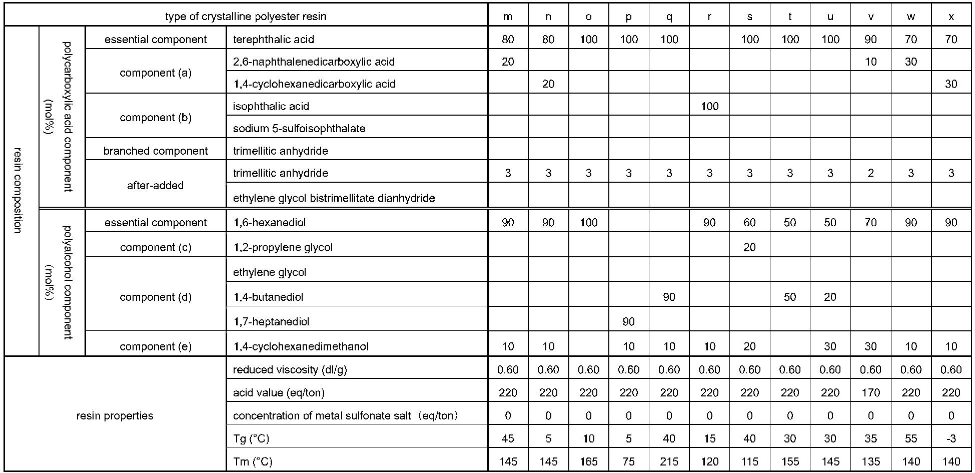

### Examples 1 to 14 and Comparative Examples 1 to 10

Each of the solvent solubility of the obtained crystalline polyester resins (a) to (n) and (o) to (x) was evaluated. Tables 2 and 3 show the evaluation results.

**[Table 2]**

| item | | Example | | | | | | | | | | | | | |
|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 |
| crystalline polyester resin | type | a | b | c | d | e | f | g | h | i | j | k | l | m | n |
| | parts by mass | 100 | 100 | 100 | 100 | 100 | 100 | 100 | 100 | 100 | 100 | 100 | 100 | 100 | 100 |
| evaluation of solvent solubility | | ○ | ○○ | ○ | ○ | ○ | ○ | ○○ | ○○ | ○○ | ○○ | ○○ | ○○ | ○○ | ○○ |

**[Table 3]**

| item | | Comparative Example | | | | | | | | | |
|---|---|---|---|---|---|---|---|---|---|---|---|
| | | 1 | 2 | 3 | 4 | 5 | 6 | 7 | 8 | 9 | 10 |
| crystalline polyester resin | type | o | p | q | r | s | t | u | v | w | x |
| | parts by mass | 100 | 100 | 100 | 100 | 100 | 100 | 100 | 100 | 100 | 100 |
| evaluation of solvent solubility | | × | ○○ | × | ○○ | ○ | × | Δ | ○○ | ○○ | ○○ |

### Production of crystalline polyester resin aqueous dispersion (B-1)

In accordance with the following procedure, the crystalline polyester resin (a) was formed into an aqueous dispersion. Into a reaction container equipped with a stirrer, a condenser, and a thermometer were charged 20 parts by mass of the crystalline polyester resin (a) and 10 parts by mass of cyclohexanone, and the resin was dissolved at 130°C over 2 hours. After the dissolution, the mixture was cooled to 100°C and had 5 parts by mass of 2-propanol and 0.5 part by mass of dimethylaminoethanol charged thereinto, and was stirred for 30 minutes. Next, 65 parts of hot water was charged thereinto and stirred for 1 hour. The stirring speed was 200 rpm. Thereafter, the inner temperature was decreased to room temperature, and a crystalline polyester resin aqueous dispersion (B-1) was obtained.

### Production of crystalline polyester resin aqueous dispersions (B-2) to (B-14) and (B-15) to (B-24)

Similarly to the production of the crystalline polyester resin aqueous dispersion (B-1), crystalline polyester resin aqueous dispersions (B-2) to (B-14) and (B-15) to (B-24) were obtained respectively using the crystalline polyester resins (b) to (n) and (o) to (x).

### Examples 15 to 28 and Comparative Examples 11 to 20

The evaluation of the properties was performed using the crystalline polyester resin aqueous dispersions (B-1) to (B-14) and (B-15) to (B-24) obtained. Tables 4 and 5 show the evaluation results.

**[Table 4]**

| item | | | Example | | | | | | | | | | | | | |
|---|---|---|---|---|---|---|---|---|---|---|---|---|---|---|---|---|
| | | | 15 | 16 | 17 | 18 | 19 | 20 | 21 | 22 | 23 | 24 | 25 | 26 | 27 | 28 |
| crystalline polyester resin aqueous dispersion | type of crystalline polyester resin aqueous dispersion | | B-1 | B-2 | B-3 | B-4 | B-5 | B-6 | B-7 | B-8 | B-9 | B-10 | B-11 | B-12 | B-13 | B-14 |
| | crystalline polyester resin | type | a | b | c | d | e | f | g | h | i | j | k | l | m | n |
| | | parts by mass | 20 | 20 | 20 | 20 | 20 | 20 | 20 | 20 | 20 | 20 | 20 | 20 | 20 | 20 |
| | cyclohexanone (parts by mass) | | 10 | 10 | 10 | 10 | 10 | 10 | 10 | 10 | 10 | 10 | 10 | 10 | 10 | 10 |
| | 2-propanol (parts by mass) | | 5 | 5 | 5 | 5 | 5 | 5 | 5 | 5 | 5 | 5 | 5 | 5 | 5 | 5 |
| | water (parts by mass) | | 65 | 65 | 65 | 65 | 65 | 65 | 65 | 65 | 65 | 65 | 65 | 65 | 65 | 65 |
| physical property | average particle size (nm) | | 250 | 220 | 240 | 240 | 240 | 240 | 200 | 200 | 200 | 240 | 200 | 200 | 200 | 200 |
| evaluation | storage stability | | ○ | ○○ | ○ | ○ | ○ | ○ | ○○ | ○○ | ○○ | ○ | ○○ | ○○ | ○○ | ○○ |
| | appearance of coating film | | ○ | ○○ | ○ | ○ | ○ | ○ | ○○ | ○○ | ○○ | ○ | ○○ | ○○ | ○○ | ○○ |
| | processability | | ○○ | ○○ | ○ | ○ | ○ | ○○ | ○○ | ○○ | ○○ | ○○ | ○○ | ○○ | Δ | ○○ |
| | retort resistance | | ○○ | ○○ | Δ | ○○ | ○○ | ○○ | ○○ | ○○ | ○○ | ○○ | ○○ | ○ | ○○ | Δ |

**[Table 5]**

| item | | | Comparative Example | | | | | | | | | |
|---|---|---|---|---|---|---|---|---|---|---|---|---|
| | | | 11 | 12 | 13 | 14 | 15 | 16 | 17 | 18 | 19 | 20 |
| crystalline polyester resin aqueous dispersion | type of crystalline polyester resin aqueous dispersion | | B-15 | B-16 | B-17 | B-18 | B-19 | B-20 | B-21 | B-22 | B-23 | B-24 |
| | crystalline polyester resin | type | o | p | q | r | s | t | u | v | w | x |
| | | parts by mass | 20 | 20 | 20 | 20 | 20 | 20 | 20 | 20 | 20 | 20 |
| | cyclohexanone (parts by mass) | | 10 | 10 | 10 | 10 | 10 | 10 | 10 | 10 | 10 | 10 |
| | 2-propanol (parts by mass) | | 5 | 5 | 5 | 5 | 5 | 5 | 5 | 5 | 5 | 5 |
| | water (parts by mass) | | 65 | 65 | 65 | 65 | 65 | 65 | 65 | 65 | 65 | 65 |
| physical property | average particle size (nm) | | dispersion failure | 200 | dispersion failure | 200 | 240 | dispersion failure | dispersion failure | dispersion failure | 200 | 200 |
| evaluation | storage stability | | - | ○○ | - | ○○ | ○ | - | - | - | ○○ | ○○ |
| | appearance of coating film | | - | ○○ | - | ○○ | ○ | - | - | - | ○○ | ○○ |
| | processability | | - | ○○ | - | × | ○ | - | - | - | × | ○○ |
| | retort resistance | | - | × | - | Δ | × | - | - | - | ○○ | × |

As is clear from the evaluation of the properties shown in the tables, the crystalline polyester resins of Examples 1 to 14 exhibited excellent or good solvent solubility. The crystalline polyester resin aqueous dispersions of Examples 15 to 28 obtained respectively using the crystalline polyester resins of Examples 1 to 14 exhibited excellent or good storage stability. The coating films made from the crystalline polyester resin aqueous dispersions of Examples 15 to 28 had excellent or good appearance, and exhibited excellent or good processability and retort resistance.

On the other hand, the crystalline polyester resin of Comparative Example 1 had a high melting point and therefore exhibited poor solvent solubility. Therefore, in Comparative Example 11, the crystalline polyester resin could not be formed into an aqueous dispersion. In Comparative Example 2, by using 1,7-heptanediol in place of 1,6-hexanediol, the melting point of the crystalline polyester resin was lowered. In Comparative Example 12, an aqueous dispersion was prepared using the crystalline polyester resin, and the coating film made from the aqueous dispersion exhibited remarkably poor retort resistance. In Comparative Example 3, due to the use of 1,4-butanediol in place of 1,6-hexanediol, the crystalline polyester resin had a higher melting point and thus exhibited poor solvent solubility. Therefore, in Comparative Example 13, the crystalline polyester resin could not be formed into an aqueous dispersion. In Comparative Example 4, due to the use of isophthalic acid in place of terephthalic acid, the main chain of the crystalline polyester resin was probably bent more than necessary. Therefore, in Comparative Example 14, the coating film made from the aqueous dispersion obtained using the crystalline polyester resin exhibited remarkably poor processability. In Comparative Example 5, the crystalline polyester resin had a low melting point. Therefore, in Comparative Example 15, the coating film made from the aqueous dispersion obtained using the crystalline polyester resin exhibited remarkably poor retort resistance. In Comparative Examples 6 and 7, the copolymerization ratio of 1,6-hexanediol of the polyalcohol component was small, and thus the crystalline polyester resin exhibited poor solvent solubility. Therefore, in Comparative Examples 16 and 17, the crystalline polyester resins could not be formed into aqueous dispersions. In Comparative Example 8, the crystalline polyester resin had a low acid value. Therefore, in Comparative Example 18, the crystalline polyester resin could not be formed into an aqueous dispersion. In Comparative Example 9, the crystalline polyester resin had only a small content of terephthalic acid and thus had a high glass transition temperature. Therefore, in Comparative Example 19, the coating film made from the aqueous dispersion obtained using the crystalline polyester resin exhibited remarkably poor processability. In Comparative Example 10, the crystalline polyester resin had only a small content of terephthalic acid and thus had a low glass transition temperature. Therefore, in Comparative Example 20, the coating film made from the aqueous dispersion obtained using the crystalline polyester resin exhibited remarkably poor retort resistance.

### Industrial Applicability

The crystalline polyester resin according to the present invention exhibits excellent solvent solubility, and the aqueous dispersion obtained using the crystalline polyester resin is formed into a coating film that has excellent appearance, exhibits excellent processability and retort resistance. Therefore, the crystalline polyester resin aqueous dispersion according to the present invention is suitable as a main agent of a coating applied to, for example, metal cans for food and beverages.

## Claims

1. A crystalline polyester resin aqueous dispersion containing a crystalline polyester resin (A) described below.
Crystalline polyester resin (A): the crystalline polyester resin containing a polycarboxylic acid component and a polyalcohol component as copolymerization components, wherein the crystalline polyester resin contains 75 mol% or more of terephthalic acid as the polycarboxylic acid component, and 55 mol% or more of 1,6-hexanediol as the polyalcohol component, wherein the crystalline polyester resin has an acid value of 180 eq/ton or more, and wherein the crystalline polyester resin has a melting point of 120 to 160°C.

2. The crystalline polyester resin aqueous dispersion according to claim 1, wherein a concentration of a metal sulfonate salt in the crystalline polyester resin (A) is less than 50 eq/ton.

3. A coating composition containing the crystalline polyester resin aqueous dispersion according to claim 1 or 2, wherein a content of a curing agent in the coating composition is less than 1 part by mass, relative to 100 parts by mass of the solid content of the crystalline polyester resin (A) in the crystalline polyester resin aqueous dispersion.

4. A coating film obtained from the coating composition according to claim 3.

5. A metal can containing the coating film according to claim 4.
